# EUROPEAN PATENT APPLICATION

(11) **EP 4 300 405 A1**
(43) Date of publication of application: **03.01.2024**
(21) Application number: 23181922.8
(22) Date of filing: 27.06.2023
(51) Int. Cl.: G06Q 30/0601

(54) **AGGREGATION OF PRODUCER INFORMATION PROVIDED TO CONSUMERS**

(30) Priority: 28.06.2022 IT 202200013675
(71) Applicant: Del Rosso, Massimo, 20133 Milano (MI) (IT)
(72) Inventor: Del Rosso, Massimo, 20133 Milano (MI) (IT)
(74) Representative: Pezzoli, Ennio

(57) **Abstract**

A solution is proposed for aggregating information of producers being provided to consumers thereof. A corresponding method (500) comprises registering (504) one or more producers with an aggregator in association with information thereof and registering (518) one or more consumers with the aggregator in association with information of producers being registered with the aggregator. The information of each producer being registered with each consumer is replaced (572) with a reference to corresponding information of the corresponding producer being registered with the aggregator. A computer program (400) and a computer program product (330) for implementing the method (500) are also proposed. Furthermore, a computing system (115) and an information technology infrastructure (300) for implementing the method (500) are proposed.

## Description

### Technical field

The present invention relates to the information technology field. More specifically, this invention relates to the management of information.

### Technology background

The background of the present invention is introduced hereinafter with the discussion of techniques relating to its context. However, even when this discussion refers to documents, acts, artifacts and the like, it does not suggest or represent that the discussed techniques are part of the prior art or are common general knowledge in the field relevant to the present invention.

In the field of information technology, information of various types is usually provided by producers to consumers thereof. A typical example is in the case of users of services offered by providers thereof, for example, through remote connection via telecommunications network. Particularly, the advent of the Internet has led to the proliferation of a myriad of different services, the use of which has become part of the daily life of most people.

Very often, the use of each service requires a registration of its users with the corresponding provider. This implies for each user the need to provide corresponding information to the provider of the service. For example, such information may include personal data of the user, *i.e*., relating to him/her as an identifiable person (such as name/surname, e-mail address, telephone number and so on); in addition, such information may include consents to the processing of the personal data (privacy consents), such as according to the General Data Protection Regulation (GDPR) in the European Union.

The widespread availability of services on the Internet has involved that most people have signed up as users of a myriad of services. This has resulted in a massive dissemination of the information of the users to the providers of the services to which they are registered.

As a result, controlling the information provided by the users to the providers of the services becomes extremely difficult, if not impossible.

In fact, the users are normally unaware of all the services to which they have registered over time. This is particularly true in the case of services that are not used any longer; typical examples are services used only once, replaced by other equivalent services and so on.

As a result, the information that has been provided by the users to the providers of the services may easily become obsolete.

Particularly, in the event that the obsolete information concerns contacts of the users (such as their e-mail addresses or telephone numbers), this makes it impossible for the providers of the services to communicate with the users. The users are therefore exposed to the risk of losing notifications (even important ones) addressed to them.

Furthermore, the diffusion of the information of the users may easily create privacy exposures.

In fact, very often the users submit personal data thereof to the providers of the services (even if not strictly necessary for their use), by accepting the settings relating to the consent to the processing of the personal data that are predefined by the providers of the services. This is due to the fact that the users may not be aware of the risks deriving from the diffusion of the personal data, they may be willing to accept them in exchange for using the corresponding services or they may simply not really pay attention to what is required by the providers of the services (what is increasingly frequent due to the use of the myriad of services that are available on the Internet).

As a result, it is possible that personal data have been submitted to the providers of the services allowing their wide use. For example, the personal data may have been submitted to the providers of the services in a public manner, or they may have been submitted in private mode but allowing their sharing with a wide range of authorized entities (such as related companies, market research agencies, social network contacts and so on).

All of the above involves that very often the personal data of the users are diffused without them being able to find to which providers such personal data have been submitted and with which consents for their treatment. Furthermore, the users may have accepted consents to the processing of the personal data that are no longer desired, without being able to find the providers of the corresponding services to modify them.

### Summary

A simplified summary of the present invention is herein presented in order to provide a basic understanding thereof; however, the sole purpose of this summary is to introduce some concepts of the invention in a simplified form as a prelude to its following more detailed description, and it is not to be interpreted as an identification of its key elements nor as a delineation of its scope.

In general terms, the present invention is based on the idea of aggregating the information.

Particularly, an aspect provides a method for aggregating information of producers being provided to consumers thereof. The method comprises registering one or more producers with an aggregator in association with information thereof and registering one or more consumers with the aggregator in association with information of producers being registered with the aggregator. The information of each producer being registered with each consumer is replaced with a reference to corresponding information of the corresponding producer being registered with the aggregator.

A further aspect provides a computer program (software) for implementing such method.

A further aspect provides a corresponding computer program product.

A further aspect provides a computing system for implementing such method.

A further aspect provides an information technology infrastructure for implementing such method.

More specifically, one or more aspects of the present invention are set forth in the independent claims and advantageous features thereof are set forth in the dependent claims, with the wording of all the claims that is incorporated herein *verbatim* by reference (with any advantageous feature provided with reference to each specific aspect that applies *mutatis mutandis* to every other aspect).

### Brief description of the drawings

The solution of the present invention, as well as further features and the respective advantages, will be better understood with reference to the following detailed description thereof, provided purely by way of a non-restrictive indication, to be read in conjunction with the accompanying drawings (wherein, for the sake of simplicity, corresponding elements are denoted with equal or similar references and their explanation is not repeated, and the name of each entity is generally used to denote both its type and its attributes, like value, content and representation). Particularly:
FIG.1A-FIG-1D show the general principles of the solution according to an embodiment of the present invention,
FIG.2A-FIG.2C show an example of application of the solution according to an embodiment of the present invention,
FIG.3 shows a schematic block diagram of an information technology infrastructure that may be used to implement the solution according to an embodiment of the present invention,
FIG.4 shows the main software components that may be used to implement the solution according to an embodiment of the present invention, and
FIG.5A-FIG.5E show an activity diagram describing the flow of activities related to an implementation of the solution according to an embodiment of the present invention.

### Detailed description

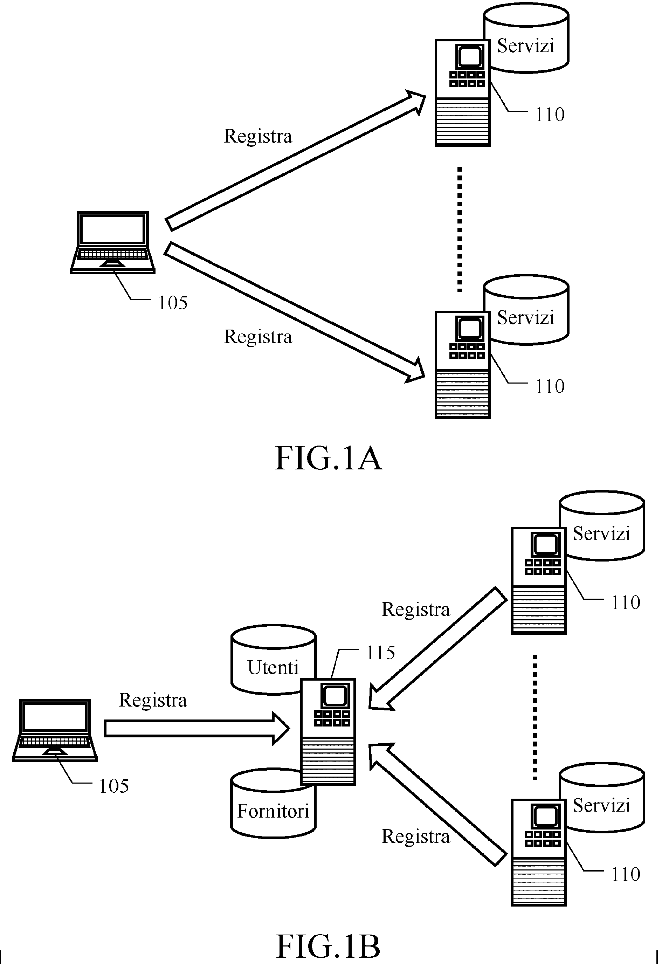

With reference in particular to FIGS.1A-FIG-1D, the general principles are shown of the solution according to an embodiment of the present invention.

Starting from FIG.1A, several producers use a client processing system thereof, or simply client 105 (only one shown in the figure) for providing their information to server processing systems, or simply servers 110 of consumers thereof (through a telecommunication network, not shown in the figure). In the specific case, these are people who use their clients 105 to exploit a series of services offered on-line by the servers 110 of providers thereof (for example, on the Internet to access bank accounts, make reservations, make purchases, communicate via social networks and so on). For this purpose, each person registers as a (registered) user of the services with the corresponding providers. This involves the user to submit information thereof to the provider of each service (such as personal data, privacy consents and so on). As a consequence, each server 110 stores an indication of the users of each service offered by its provider and their information.

Moving to FIG.1B, in the solution according to an embodiment of the present invention a server processing system, or simply server 115 of an aggregator provides an aggregation service of information of the producers being submitted to the consumers (*i.e*., information of the users being submitted to the providers of the services to which they are registered in the case at issue). Each (new) producer is registered with the aggregator (as aggregated producer) in association with (aggregated) information of the producer; the information of the producer comprises identification information thereof (such as its certified e-mail address and/or telephone number). Likewise, each (new) consumer is registered with the aggregator (as aggregated consumer) in association with an indication of the producers which are registered therewith, or at least the ones that are registered with the aggregator as well (as registered producers), each of them in association with information of the producer (comprising its identification information) that has been submitted by the producer to the consumer (producer information).

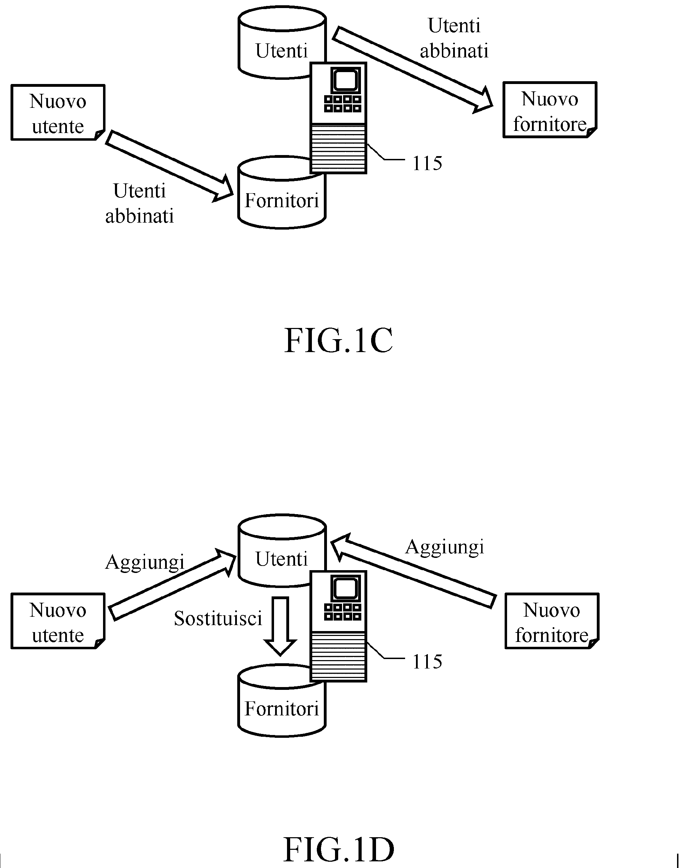

Moving on to FIG.1C, a (matching) producer corresponding to a (current) producer equal to the new producer is searched among the producers of each (current) consumer being registered with the aggregator; likewise, a (matching) producer corresponding to a (current) producer equal to each producer being registered with the aggregator is searched among the producers of each (current) consumer of the new consumer. In any case, the search is performed according to a comparison between the identification information of the current producer and the identification information of the current producer.

Moving to FIG.1D, the information of the matching producer is classified into matching information and non-matching information that matches and does not match, respectively, the information of the current producer. The non-matching information (if any) of the matching producer is added to the information of the current producer (to be registered or already registered with the aggregator). In any case, the information of the matching producer (of the consumer already registered or to be registered with the aggregator) is then replaced with the reference to the corresponding information of the current producer (already present or just added). In this way, the information of each producer being registered with the aggregator becomes equal to the information of the producer that has been submitted to the consumers with which the producer is registered; the information of each producer of the consumers being registered with the aggregator becomes equal to the references to the corresponding information of the same producer being registered with the aggregator.

The above-described solution links the producers with the consumers of the information, and in particular the users with the providers of the services. Particularly, the aggregator creates a 1:N relationship among each user and the services to which s/he is registered (which adds to the 1:1 relationship of the user with each of them being normally used).

This allows controlling the relationships between the users and the providers of the services in a simple and effective way.

Particularly, each user may have an immediate view of the services to which s/he is registered and of the information that has been submitted to their providers (even in the case of services that are not used any longer). In other words, the information is brought back under the control of the users, as in a sort of repository that each user may make available to the providers of the services at will (for example, what information, to which providers, with which consents, for how long time and so on).

Furthermore, the information being submitted by the users to the providers of the services to which they are registered and/or the information requested by the providers of the services to their users may thus be kept easily up-to-date. In this way, it is possible to avoid (or at least substantially reduce) the risk of loss of notifications addressed to the users by providers of the services.

This also limits privacy exposures for the users. In fact, each user may easily keep under control the personal data that have been submitted to the providers of the services and the consents relating to their treatment. As a result, personal data and consents to their processing that are not desired any longer may be easily removed from the providers of the corresponding services. All of the above makes it possible to avoid (or at least substantially reduce) the risks of confidentiality exposures.

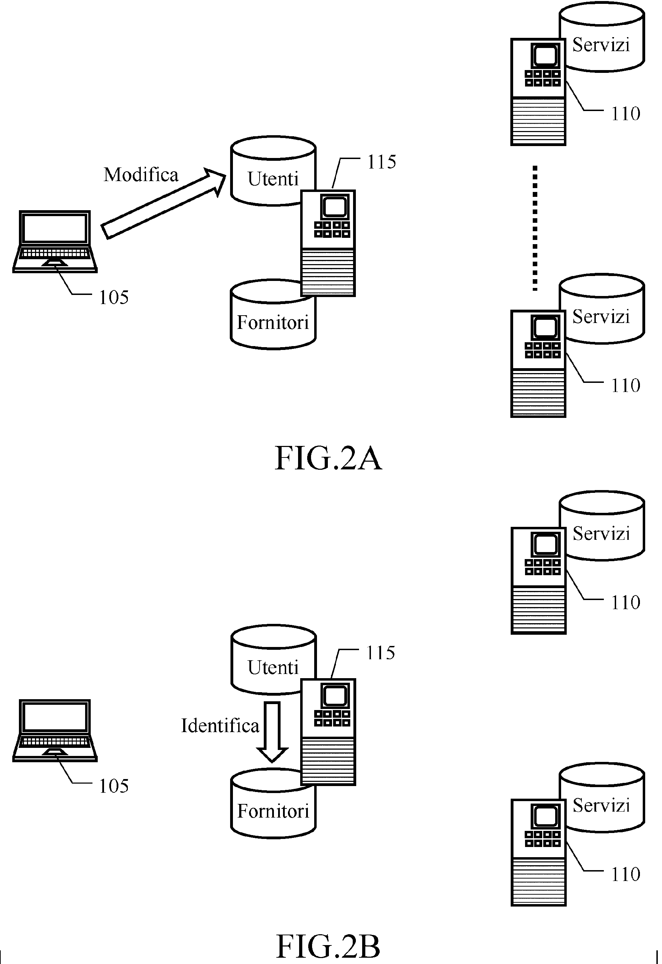

With reference in particular to FIG.2A-FIG.2C, an example is shown of application of the solution according to an embodiment of the present invention.

Starting from FIG.2A, a (modifying) producer which is registered with the aggregator submits a request of modification of (modified) information thereof, by accessing the server 115 with its client 105 (through the telecommunication network, not shown in the figure). In response thereto, the requested modifications are applied to the information of the producer. Similar considerations apply to the case (not shown in the figure) wherein the producer modifies its information with one of the consumers to which it is registered (by accessing the corresponding server 110 with its client 105 through the telecommunications network), with this server 110 that then submits the same request of modification to server 115.

Moving to FIG.2B, the (modifying) consumers being registered with the aggregator with which the producer is registered and whose information comprises the reference to the modified information are identified.

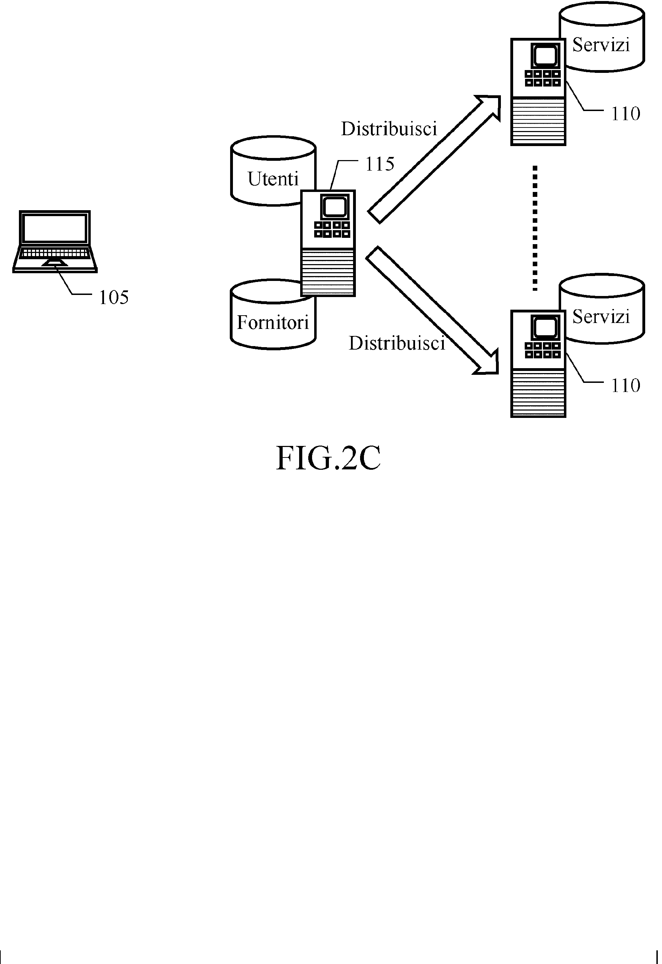

Moving to FIG.2C, the modified information is distributed to the consumers thus identified (from the server 115 to the corresponding servers 110 through the telecommunication network, not shown in the figure). In response thereto, each of such consumers modifies the information of the producer accordingly (in its server 115).

In this way, each producer may manage its information being provided to the consumers centrally, particularly for the users of the providers of the services. Therefore, any modification of the information of the user in the server 115 or in one of the servers 110 is automatically replicated in the servers 110 of all the providers of the services to which the user is registered. This makes it much easier for the user to modify his/her information (for example, in case of change to a new phone number, e-mail address, credit card, checking account and so on). In fact, in this way the user modifies his/her information only once (in the server 115 or in the server 110) with a corresponding saving of time. Nonetheless, the modifications are applied (at least in part automatically) in the servers 110 of all the providers of the services to which the user is registered, thereby reducing the risk of having obsolete information in some of them (for example, if forgotten by the user) and therefore to lose corresponding notifications (even important ones).

Furthermore, the modification of the information in the servers 110 may be done more efficiently (for example, by exploiting connections of the telecommunications network among the server 115 and the servers 110 with better performance, such as higher bandwidth, than those among the client 105 and the servers 110).

This also makes it possible to optimize a use of the telecommunication network, with a positive effect on its performance.

For example, the server 115 may determine an optimal period for distributing the modified information to the servers 110 according to performance data (such as relating to the telecommunication network, like its estimated workload based on historical information). The server 115 then distributes the modified information during such optimal period (for example, at night, on weekends and so on).

In addition or in alternative, the server 115 aggregates the modified information of the users based on the providers of the services to which they are registered. For example, this happens periodically (such as every hour, day and so on) and/or when the modified information for each provider reaches a size threshold. The server 115 then distributes the modified information that has been aggregated to each of the servers 110.

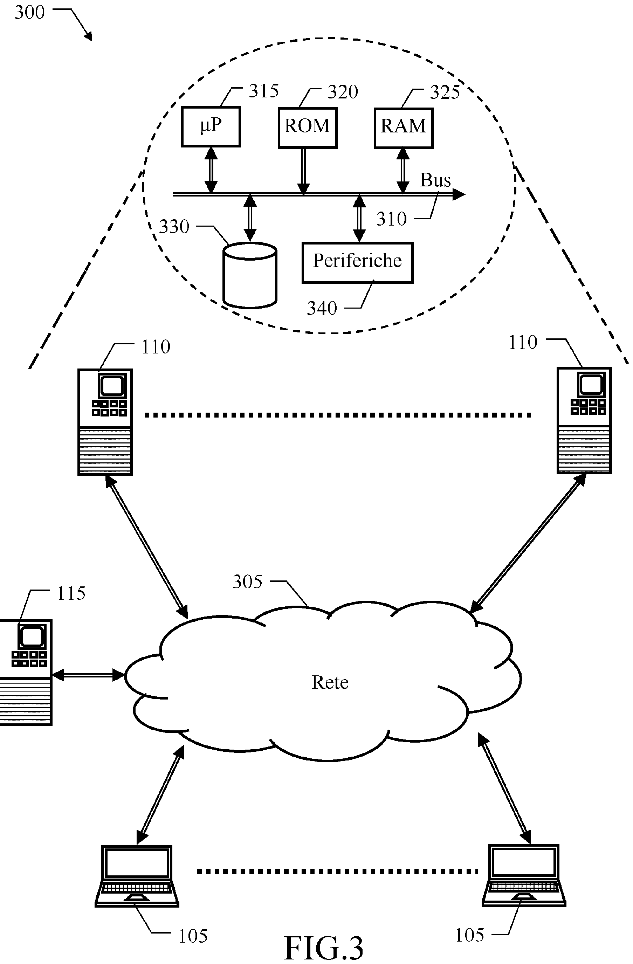

With reference now to FIG.3, a schematic block diagram is shown of an information technology infrastructure 300 that may be used to implement the solution according to an embodiment of the present invention.

The (information technology) infrastructure 300 comprises a plurality of instances of the clients 105 (which may be used by the users and by administrators of the providers of the services), a plurality of instances of the servers 110 (of the providers) and of the server 115 (of the aggregator). The clients 105, the servers 110 and the server 115 communicate with each other through a telecommunication network 305 (for example, of global type such as based on the Internet).

Each of the computing systems of above (*i.e.*, client 105 and server 110,115) comprises several units that are connected among them through a bus structure 310 at one or more levels (with an architecture that is suitably scaled according to the type of the computing system 105-115). Particularly, a microprocessor (µP) 315, or more, provides the logic capability of the computing system 105-115; a non-volatile memory (ROM) 320 stores basic code for a bootstrap of the computing system 105-115 and a volatile memory (RAM) 325 is used as a working memory by the microprocessor 315. The computing system 100 is provided with a mass-memory 330 for storing programs and data (for example, a Solid State Disk (SSD) for each client 105 and storage devices of a data center wherein each server 110,115 is implemented). Moreover, the computing system 105-115 comprises a number of controllers for peripherals, or Input/Output (I/O) units, 340; for example, the peripherals 340 of each client 105 comprise a keyboard, a mouse, a monitor, a network adapter (NIC) for connecting to the (communication) network 305 and a drive for reading/writing removable storage units (such as of USB type), whereas the peripherals of each server 110,115 comprise a network card for plugging the server 105 into the data center and then connecting it to a console of the data center for its control (for example, a Personal Computer also provided with a drive for reading/writing removable storage units, such as of USB type) and to a switch/router sub-system of the data center for its communication with the network 305.

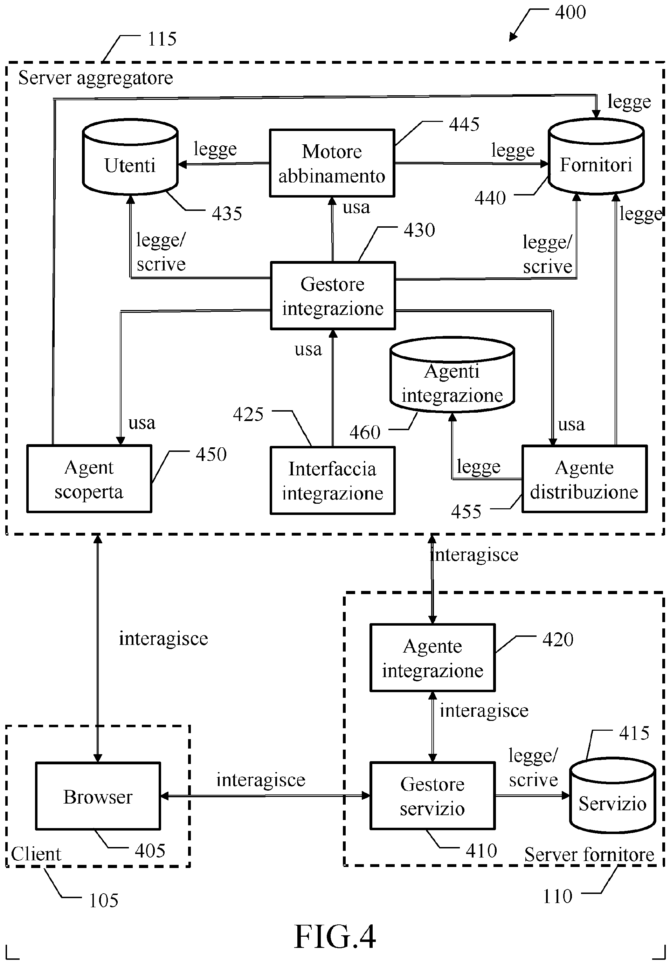

With reference now to FIG.4, the main software components are shown that may be used to implement the solution according to an embodiment of the present invention.

All the software components (programs and data) are denoted as a whole with the reference 400. The software components are typically stored in the mass memory and loaded (at least partially) into the working memory of each computing system 105-115 when the programs are running, in addition to an operating system and to a number of application programs not directly relevant to the solution of the present invention (and thus omitted in the figure for the sake of simplicity). The programs are initially installed into the mass memory, for example, from removable storage units or from the network. In this respect, each program may be a module, segment or portion of code, which comprises one or more executable instructions for implementing the specified logical function.

Starting from each client 105 of a user/administrator (only one shown in the figure), it comprises a browser 405 that is normally used to surf the Internet. In this case, the browser 405 is used to interact with the servers 110 (of the providers of the services to which s/he is registered in the case of a user or with the corresponding provider in the case of one of its administrators) and with the server 115.

Moving to the server 110 of each provider (only one shown in the figure), it comprises the following components. A corresponding service manager 410 manages each service offered by the provider (only one shown in the figure). The service manager 410 exposes a user interface for use by the users of the service and an administrator interface for use by the administrator of the provider, interacting with the browser 405 of the corresponding clients 105. The service manager 410 reads/writes a service repository 415. The service repository 415 contains information about the service and its users. The information of the service comprises information that is requested and possibly provided to the users of the service. The information is identified by keys that specify its type. For example, the information being requested may be data or documents, such as name and surname, e-mail address, telephone number, address, date and place of birth, checking account, credit card, consent to the processing of personal data, billing data, identity card, driving license and so on; the information that is provided to the users of the service is privacy notice, terms and conditions of use, expense reporting, invoices and so on. The service repository 415 then comprises a list of entries for the users being registered to the service. The entry of each user comprises a unique identifier of the user in the service, authentication data of the user with the service (for example, password) and information about the user in the context of the service. The information of the user is defined by one or more fields, each having a key that identifies the type, a value thereof (data/document) and possible control data (such as receipt date, delivery date, expiration date and so on). Particularly, the information of the user comprises information that has been provided by the user to the provider of the service and possibly information that has been provided by the provider of the service to the user (according to what above). The service manager 410 interacts with an integration agent 420. The integration agent 420 locally implements the integration of the information of the users of the services offered by the provider with the information of the same users being submitted to other providers, interacting with the server 115.

In the solution according to an embodiment of the present invention, the server 115 of the aggregator comprises the following components. An integration interface 425 is exposed to access the service offered by the aggregator (for example, as Software as a Service, SaaS), interacting with the browser 405 of each user/administrator and with the integration agent 420 of each provider. The integration interface 425 uses an integration manager 430. The integration manager 430 centrally manages the integration of the information of the users of the services offered by the various providers. The integration manager 430 reads/writes a users repository 435 and a providers repository 440.

The users repository 435 contains information of the users relating to the services to which they are registered. For example, the users repository 435 has an entry with a profile of each user being registered with the aggregator. The entry comprises a unique identifier of the user for the aggregator, authentication data of the user with the aggregator (for example, password) and information of the user being submitted to the providers of the services to which s/he is registered. The information is defined by one or more fields. Each field has a unique identifier of the field for the user and one or more keys; the keys if multiple represent synonyms of the same field (for example, "electronic mail", "e-mail" for the e-mail address, "telephone", "tel.", "mobile" for the telephone number and so on). The fields may be of simple or complex type (for example, distinguished by a corresponding flag). Each simple field comprises a value thereof and possible control data (as above). Each complex field comprises the identifiers of a plurality of simple fields of the user that compose it; for example, a complex field "address" comprises the identifiers of the simple fields "street", "house number" and "city", a complex field "nominative" comprises the identifiers of the simple fields "name" and "surname" and so on. One or more fields (such as e-mail address, phone number and so on) are marked as identification fields; the identification fields define identification information of the user. This structure of the information of the users is very flexible, since it allows defining any type of information dynamically.

The providers repository 440 contains information of the services offered by the providers. For example, the providers repository 440 has an entry with a profile of each provider being registered with the aggregator. The entry comprises a unique identifier of the provider for the aggregator, authentication data of the provider with the aggregator (for example, password) and information of the provider (for example, denomination, e-mail address, telephone number, billing data, cost reporting, invoices and so on). In turn, the entry of the provider comprises an entry for each service offered by the provider. The entry of the service comprises a unique identifier of the service for the provider, information of the service, and a list of entries for the users of the service. The information of the service comprises an access address to its integration agent, the information being requested to its users and the information being provided to its users. The entry of each user of the service comprises a unique identifier of the user for the service, the identifier of the user for the aggregator if registered with it, information of the user being submitted to the provider of the service, a status indicator of the user in connection with the service and a log of modifications of the information of the user. For example, the status indicator may be "new" if the matching between the user of the service and the corresponding user being registered with the aggregator is yet to be confirmed, "active" if the matching is confirmed, "alert" if one or more alerts (for new information being requested or information being expiring of the user) are pending, or "suspended" if the service is not usable by the user due to the lack of information being requested that is necessary (such as mandatory consents for processing personal data). The information of the user is defined by one or more fields, each having a key. Each field comprises the identifier of the corresponding field of the information of the corresponding user in the users repository (if the user is registered with the aggregator) or its actual value (if the user is not registered with the aggregator). The modifications log contains information about modifications to the information of the user over time. For example, the modifications log has an entry for each modification; the entry contains the date of the modification, the new information being submitted/received and corresponding communications (for example, certified electronic mail messages (PEC) for the request to the user, for the submission by the user and so on).

The integration manager 430 uses a matching engine 445. The matching engine 445 matches the users to be registered or already registered with the aggregator with the users of the services of the providers already registered or to be registered with the aggregator, respectively. The matching engine 445 reads the users repository 435 and the providers repository 440. The integration manager 430 uses a discovery agent 450. The discovery agent 450 discovers other providers of services that are not registered with the aggregator and to the services of which each (new) user to be registered with the aggregator is registered. The discovery agent 450 reads the providers repository 440. The integration manager 430 uses a distribution agent 455. The distribution agent 455 distributes the integration agent 420 to the servers 110 of the providers being registered with the aggregator. For this purpose, the distribution agent 455 reads an integration agents repository 460. The integration agents repository 460 contains a number of versions of the integration agent 420 for different types of the service manager 410, for example, for the most common Content Management Systems (CMS) that are used to implement the service manager 420 (such as Wordpress, Drupal, Prestahop and so on, trademarks of the corresponding owners). The distribution agent 455 distributes the information of the user to the providers of the services to which they are registered, interacting with the integration agent 420 of their servers 110. For this purpose, the distribution agent 455 reads the providers repository 445.

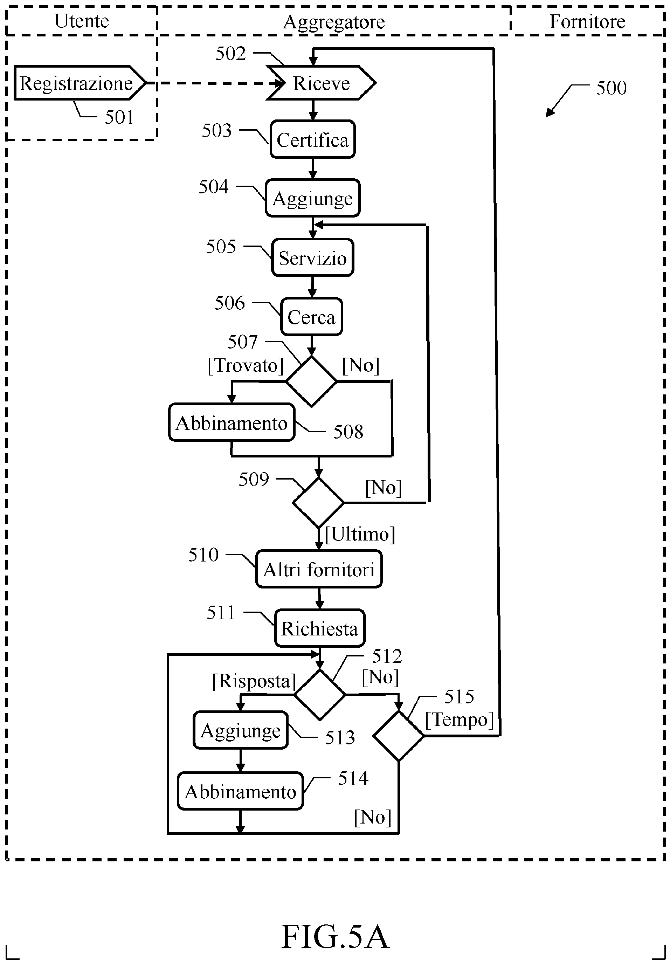

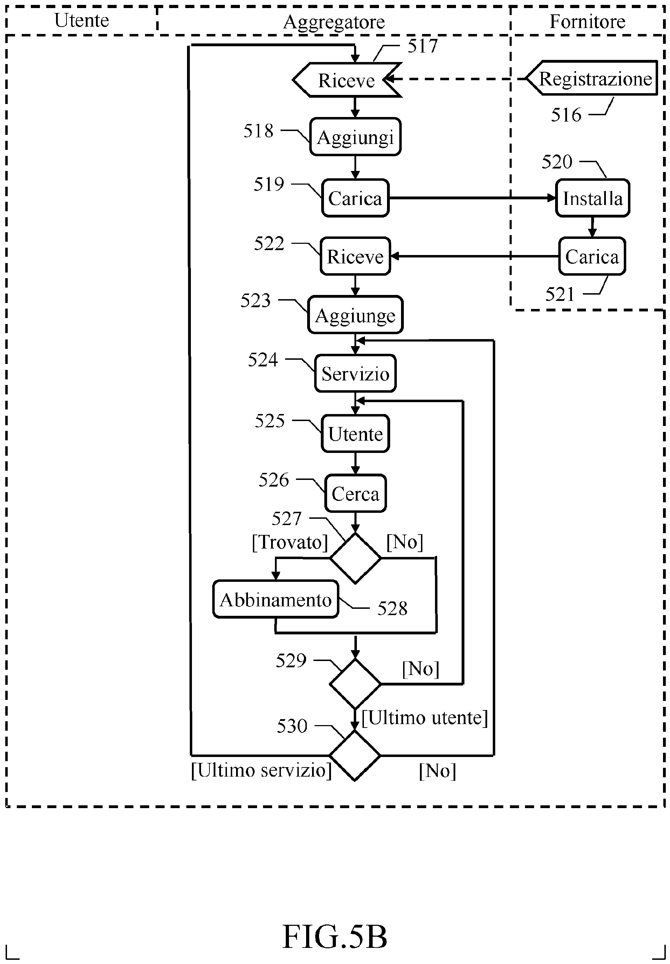

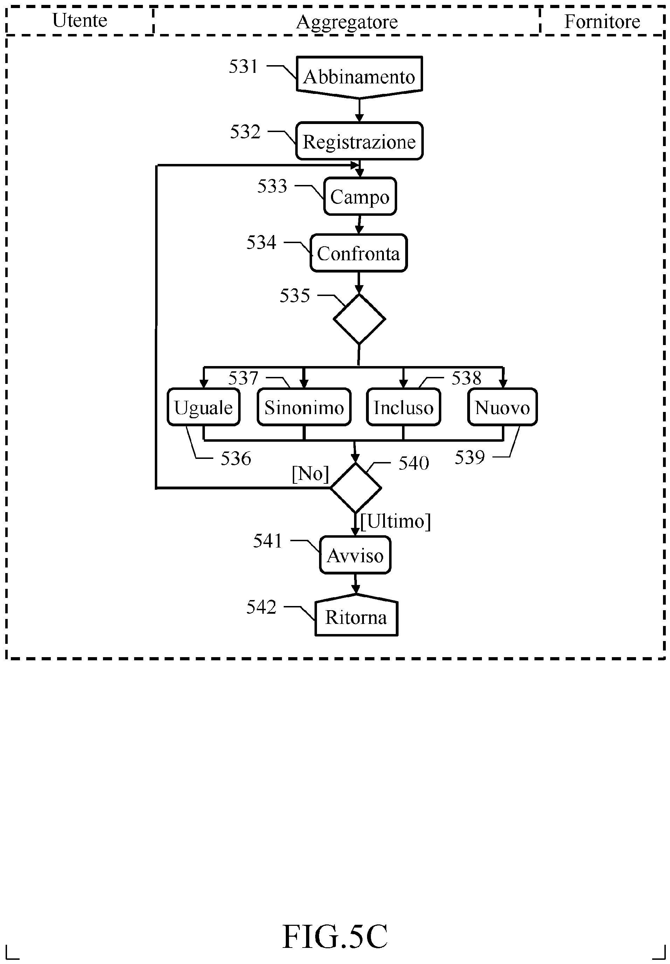

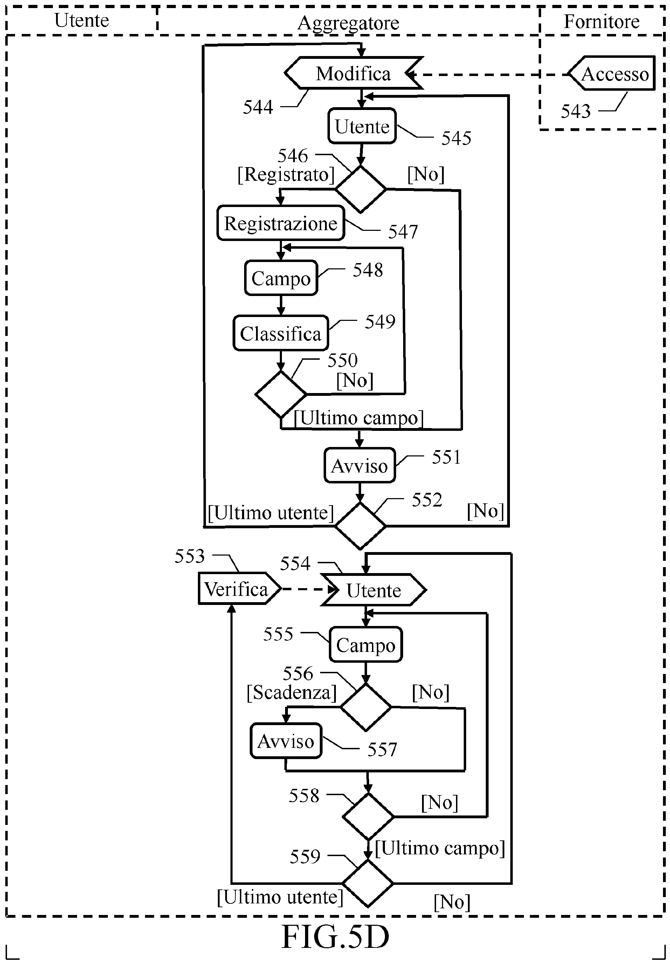

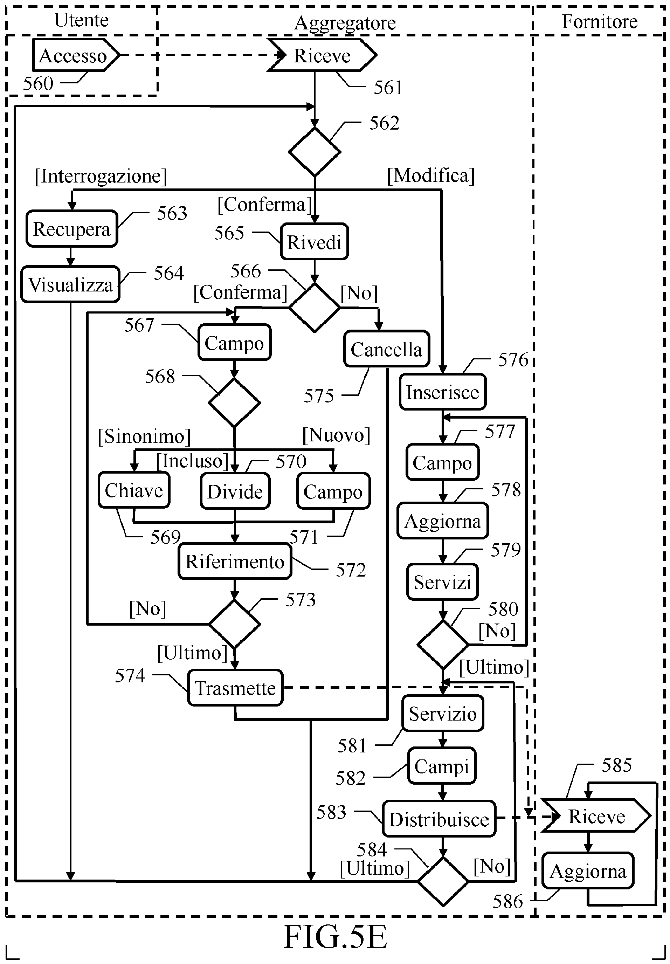

With reference now to FIGS.5A-FIG.5E, an activity diagram is shown describing the flow of activities related to an implementation of the solution according to an embodiment of the present invention.

Particularly, the diagram represents an exemplary process that may be used to aggregate the information of the users of the services offered by the providers with a method 500. In this respect, each block may correspond to one or more executable instructions for implementing the specified logical function on the relevant computing systems.

Starting from the swim-lane of a generic user, the browser is used at block 501 by the user to submit a request of registration of the (new) user to the aggregator. For this purpose, the user accesses a web page of the aggregator and enters his/her authentication data, his/her identification information and possible other information of the user. Passing to the swim-lane of the aggregator, the integration interface receives the registration request at block 502. In response thereto, the integration interface at block 503 certifies the identification data of the user (for example, by double opt-in for the e-mail address, SMS message for the telephone number, public digital identity system (SPID) for the name/surname and so on). Once the identification information of the user has been successfully certified, the integration manager at block 504 adds a new entry for the user (with his/her authentication data and information) to the corresponding repository.

A loop is then performed to match the (current) user with the services of the providers already registered with the aggregator (as indicated in the corresponding repository). The loop begins at block 505, wherein the matching engine takes into account a (current) service of such providers (starting from a first one in any order). The matching engine at block 506 searches for the current user among the users of the service. For this purpose, the matching engine compares the identification fields (of the information) of the current user with the fields (of the information) of each user of the service, starting from a first one in any order. The flow of activity branches at block 507 according to an outcome of this search. If a (matching) user of the service is found having one of its fields (or more) with a key comprised in the keys and a value equal to the value of an identification field of the current user, the matching engine at block 508 performs a matching procedure between the current user and the matching user, described in detail in the following. The process then continues at block 509; the same point is instead reached directly from block 507 if no user of the service matches the current user. At this point, the matching engine verifies whether a last service of the providers repository has been processed. If not, the process returns to block 505 to repeat the same operations with a further service of the providers repository. Conversely, once all the services of the providers repository have been processed, the loop is exited by passing to block 510.

At this point, a further loop is performed to match the current user with the services of other (non-aggregated) providers that are not registered with the aggregator (for example, available only if the current user is of "premium" level and s/he has provided a mandate to the aggregator for collecting his/her information). The loop begins with the discovery agent that retrieves a list of providers (for example, by consulting databases in the Internet of national, European or global companies); the discovery agent reduces the list of providers, removing those being already registered with the aggregator (as indicated in the corresponding repository). The discovery agent at block 511 sends a (discovery) request for the information of the current user to such providers (for example, via a certified mail message); the discovery request contains the identification information of the current user and the mandate for collecting his/her information. The discovery agent at block 512 verifies whether a positive response has been received to the discovery request of the current user from a corresponding provider; the positive response contains information of the provider, information of the service offered by the provider to which the current user is registered and information of the (matching) user of such service corresponding to the current user being provided to the provider. If so, the integration manager at block 513 adds a (new) entry with the information of the provider, the information of the service and the information of the matching user to the providers repository. In this case as well, the matching engine at block 514 performs the matching procedure between the current user and the matching user, described in detail in the following. The process then returns to block 512 to verify whether a further positive response has been received to the discovery request. Referring again to block 512, if a negative response has been received (indicating that the current user is not registered with any service of the provider) or if no response has been received, the discovery agent at block 515 verifies whether a time-out has elapsed since the discovery request has been sent (for example, 6-24 hours). If not, the process returns to block 512 to verify whether a further positive response has been received to the discovery request. Conversely, once the time-out has elapsed, the loop is exited with the process returning to block 502 waiting for a request of registration of a further user.

In a completely independent way, the browser of the client of the administrator of a generic provider is used at block 516 to submit a request of registration of a (new) provider to the aggregator. For this purpose, the administrator accesses another web page of the aggregator and enters his/her authentication data and the information of the provider. Moving to the swim-lane of the server of the aggregator, the integration interface receives the registration request at block 517. In response thereto, the integration interface at block 518 adds a (new) entry for the provider (with its authentication data and its information) to the corresponding repository. The distribution agent at block 519 uploads the version of the integration agent being appropriate for its service manager to the server of the provider. Returning to the swim-lane of the server of the provider, the integration agent installs itself at block 520 (subject to authorization of the administrator) as a plug-in of each service manager. Alternatively (not shown in the figure), the provider has previously developed and installed its own integration agent that manages the interaction between each of its service managers (even if of on-standard, custom, type) and the integration interface (through calls to functions made available by it, such as in the form of webservices, APIs and so on). In any case, for each service offered by the provider, the aggregation agent at block 521 loads the information of the service and the information of its users to the server of the aggregator.

Passing to the swim-lane of the server of the aggregator, the integration interface receives such information at block 522. The integration manager at block 523 adds a (new) entry for each service of the provider (with the information of the service and the information of its users) to the entry of the provider in the corresponding repository. A loop is then performed to match the users being registered with the aggregator with the services of the provider. The loop begins at block 524, wherein the matching engine takes into account a (current) service of the provider (starting from a first one in any order). The matching engine at block 525 takes into account a (current) user of the corresponding repository (starting from a first one in any order). The matching engine at block 526 searches for the current user among the users of the service as above (comparing the identification fields of the information of the current user with the fields of the information of each user of the service). The flow of activity branches at block 527 according to an outcome of this search. If a (matching) user of the service is found having one of its fields (or more) with a key comprised in the keys and a value equal to the value of an identification field of the current user, the matching engine at block 528 performs the matching procedure between the current user and the matching user, described in detail in the following. The process then continues at block 529; the same point is instead reached directly from block 527 if no user of the service matches the current user. At this point, the matching engine verifies whether a last user of the corresponding repository has been processed. If not, the process returns to block 525 to repeat the same operations with a further user of the corresponding repository. Conversely, once all the users of the corresponding repository have been processed, the loop is exited by passing to block 530. The matching engine now verifies whether a last service of the provider has been processed. If not, the process returns to block 524 to repeat the same operations with a further service of the provider. Conversely, once all the services of the provider have been processed, the loop is exited by returning to block 517 waiting for the registration request of a further provider. Considering now the matching procedure, it starts at block 531 wherein the matching procedure receives the indication of the current user (new user or user being already registered) and the indication of the matching user (of the service of a provider being already registered or of a new provider, respectively) in association with their information. In response thereto, the matching engine at block 532 creates a pending record, to be confirmed by the current user, comprising the identifier of the service and the identifier of the matching user; the matching engine adds the key of the identification field of the matching user to the pending record, marking it as equal to the identifier of the corresponding field of the current user. A loop is then performed to verify the other fields (of the information) of the matching user. The loop begins at block 533 wherein the matching engine takes into account a (current) field of the matching user (starting from a first one in any order) and adds its key to the pending record. The matching engine at block 534 compares this field of the matching user with the fields (of the information) of the current user. The flow of activity branches at block 535 according to an outcome of this comparison (with each of the above-described alternatives being possible one or more times in case the field is not new). For each field of the current user being found with keys comprising the key and value equal to the value of the field of the matching user, the matching engine at block 536 marks the field of the matching user in the pending record as equal to the identifier of the corresponding field of the current user. For each field of the current user being found with keys not comprising the key and value equal to the value of the field of the matching user, the matching engine at block 537 marks the field of the matching user in the pending record as synonymous of the identifier of the corresponding field of the current user. For each field of the current user being found with part of the value equal to the value of the field of the matching user, the matching engine at block 538 marks the field of the matching user in the pending record as included in the identifier of the corresponding field of the current user. In all the other cases (*i.e*., all the fields of the current user have different value and do not comprise the value of the field of the matching user), the matching engine at block 539 marks the field of the matching user in the pending record as new. The flow of activity merges at block 540 (from blocks 536-539), wherein the matching engine verifies whether all the fields of the matching user have been processed. If not, the process returns to block 533 to repeat the same operations with a next field of the matching user. Conversely, once all the fields of the matching user have been processed, the loop is exited by passing to 541. At this point, the aggregation manager sets the status indicator of the matching user in the service as "new". At the same time, the aggregation interface sends a confirmation notice of the pending record to the current user (for example, by e-mail message). The matching procedure then terminates to block 542 (returning the control to the point wherein it has been invoked).

Alternatively, not shown in the figure, the pending record is automatically confirmed (with the aggregation manager that adds the necessary fields to the information of the current user and replaces the values of the fields of the matching user in the providers repository with the identifier of the corresponding fields of the current user as described in the following). In this case, when the user accesses the server of the aggregator through the browser of his/her client, the newly added service is highlighted (for example, in a different color), so as to possibly allow the user to remove it if not recognized.

At any time, the browser at block 543 in the swim-lane of the client of a generic provider may be used by its administrator to access the server of the aggregator (subject to his/her authentication). The integration interface at block 544 is then used by the administrator to request (new) information to the users of a service offered by the provider. In response thereto, the aggregator interface transmits an indication of the new information to the aggregation agent of the server of the provider to cause the corresponding service manager to update the service repository accordingly (not shown in the figure). Alternatively (not shown in the figure), the administrator requests the new information for a service offered by the provider on its server (with the corresponding service repository that is updated accordingly). In response thereto, the aggregation agent transmits an indication of the new information to the aggregation interface. In any case, a loop is started at block 545, wherein the integration manager takes into account a user of the service (starting from a first one in any order). The flow of activity branches at block 546 according to the user. If the user is registered with the aggregator, *i.e*., a (current) user corresponding to the (matching) user of the service is present in the users repository, the matching engine at block 547 creates a pending record, to be confirmed by the current user, comprising the identifier of the service and the identifier of the user for the service, and a list of required information (initially empty). A loop is then performed to verify the fields of the new information. The loop begins at block 548, wherein the matching engine takes into account a (current) field of the new information (starting from a first in any order). The matching engine at block 549 classifies the field as above, marking it in the pending record as equal, synonymous and/or included (of the identifier of the corresponding field of the current user) or as new. In the first case, the matching engine adds the key of the (equal, synonymous and/or included) field to the pending record, whereas in the second case the matching engine adds the field of the (new) key to the list of requested information. The matching engine at block 550 verifies whether all the fields of the new information have been processed. If not, the process returns to block 548 to repeat the same operations with a next field of the new information. Conversely, once all the fields of the new information have been processed, the loop is exited by passing to 551; the same point is instead reached directly from block 546s if the user is not registered with the aggregator. At this point, the aggregation interface sends a modification notice to the user (for example, via e-mail). Particularly, in case the user is registered with the aggregator the modification notice is for confirming the pending record of the user by accepting the equal/synonym/included fields (if found) and/or to provide the (missing) information of the new fields being indicated in the list of missing information (if found); in case the user is not registered with the aggregator, instead, the modification notice is for providing all the (missing) modified information. At the same time, the aggregation manager updates the status indicator of the user in the providers repository accordingly (setting it as "alert" or "suspended" if the new information is optional or mandatory, respectively). The aggregation manager at block 552 verifies whether all the users of the service have been processed. If not, the process returns to block 545 to repeat the same operations with a next user of the service. Conversely, once all the users of the service have been processed, the loop is exited and the process returns to block 544 waiting for a next modification request. This procedure allows the providers of the services to directly obtain new information being requested from their users when this information has already been submitted by the users to the providers of other services (with a corresponding saving in traffic on the telecommunications network and therefore a corresponding increase in its performance).

In a completely independent way, the process passes from block 553 to block 554 every verification period (for example, every night) of the expirations of the information of the user. In response thereto, a loop is performed wherein the integration manager takes into account a (current) user of the corresponding repository (starting from a first one in any order). A loop is then performed to verify the fields of the information of the user (in the users repository). The loop begins at block 555, wherein the aggregation manager takes into account a (current) field of the information of the user (starting from a first one in any order). The flow of activity branches at block 556 according to the control data of the field. If the field contains an expiration of the corresponding value (data/document) having a date that falls within a predefined period from today's date (such as within 15-30 days), the aggregation interface at block 557 sends a corresponding expiration notice to the user (for example, by e-mail). At the same time, the aggregation manager updates the status indicator of each corresponding user of the services of the providers in their repository accordingly (setting it as "alert" if the information is not expired yet or even if it is expired but optional or as "suspended " if the information is expired and mandatory). The process then continues at block 558; the same point is also reached from block 556 if the field does not contain any expiration. At this point, the aggregation manager verify whether all the fields of the information of the user have been processed. If not, the process returns to block 555 to repeat the same operations with a next field of the information of the user. Conversely, once all the fields of the information of the user have been processed, the loop is exited by passing to block 559. The aggregation manager now verifies whether all the users of the corresponding repository have been processed. If not, the process returns to block 554 to repeat the same operations with a next user of the corresponding repository. Conversely, once all the users of the corresponding repository have been processed, the loop is exited and the process returns to block 553 waiting for a next verification period.

At any time, the browser at block 560 in the swim-lane of the client of a generic user may be used by the him/her to access the server of the aggregator (subject to authentication thereof). The integration interface at block 561 is then used by the user to select various operations made available by it. The flow of activity branches at block 562 according to the operation being selected by the user. Particularly, in the case of a query operation blocks 563-564 are executed, in the case of a confirmation operation blocks 565-575 are executed and in the case of a modification operation blocks 576-584 are executed. In any case, the process then returns to block 562 to continuously repeat the same operations, until the user disconnects from the aggregation interface.

With reference now to block 563 (query operation), the aggregation manager retrieves the information of the user from the users repository and from the providers repository. Particularly, the aggregation manager retrieves any pending records of the user. The aggregation manager determines the services to which the user is registered (containing his/her identifier for the aggregator in the providers repository). For each of these services, the aggregation manager determines the status of the user therein (extracted from the providers repository); moreover, the aggregation manager determines the information of the user being submitted to its provider (replacing the identifiers contained in its fields with their values extracted from the users repository). The aggregation interface at block 564 displays the information of the user (transmitting it to its client for representation thereof on its monitor) in various selected modes. For example, the user may choose to see the services to which the user is registered, their status, corresponding pending records, the information submitted to each of them, the services to which the value of each field has been submitted and so on. The process then returns to block 562. This allows the user to have an overview of all the services to which s/he is registered and the information that has been submitted to their providers.

With reference instead to block 565 (confirmation operation), the user selects one of his/her pending records. The user uses the aggregator interface to review the pending record. In this phase the user may modify each field of the pending record. For example, the user selects the corresponding field of the current user in case of multiple alternatives, transforms a field marked as equal, synonymous or included to new (when the field of the matching user and the current user instead represent different types of information, such equal field with same key "city" and same value for address and place of birth, synonymous field with same value for expiry of identity card and expiry of driving license, included field with same value for age comprised in field for address, and so on). The flow of activity then branches at block 566 according to an outcome of this review. If the user confirms the (possibly modified) pending record, a loop is performed to process its fields (after adding a (new) entry for the user to the entry of the service in the providers repository with the information of the pending record if necessary). The loop begins at block 567, wherein the aggregation manager takes into account a (current) field of the pending record (starting from a first one in any order). The flow of activity branches at block 568 according to how the field is marked. If the field of the matching user is marked as synonymous of the identifier of the corresponding field of the current user, the aggregation manager at block 569 adds the key of the field of the matching user to the keys of the field of the current user in the users repository; for example, a field of the matching user with key "electronic mail" and value "myMail" ("electronic mail: myMail") transforms the field of the current user with identifier "mylD", key "e-mail" and value "myMail" ("myID - e-mail: myMail") to "myID - e-mail, electronic mail: myMail". If the field of the matching user is marked as included in the identifier of the corresponding field of the current user, the aggregation manager at block 570 replaces the field of the current user in the users repository with a first simple field having the key and comprising the value of the field of the matching user, a second simple field having a new key (for example, generated from the key of the field of the current user by adding a pre-defined suffix) and comprising the part of the value of the field of the current user other than the value of the field of the matching user, and a complex field having the identifier and the keys of the field of the current user and comprising the identifiers of the first simple field and of the second simple field; for example, a field of the matching user with key "street" and value "myStreet" ("street: myStreet") transforms a field of the current user with identifier "IDu", key "address" and value "myCity,myStreet" ("IDu - address: myCity,myStreet") into a first simple field with identifier "IDsl", key "street" and value "myStreet" ("IDs1 - street: myStreet"), a second simple field with identifier "IDs2", key "Kn" and value "myCity" ("IDs2 - Kn: myCity"), and a complex field with identifier "IDc", key "address" and value "IDs1,IDs2" ("IDc - address: IDsl,IDs2"). If the field of the matching user is marked as new, the aggregation manager at block 571 adds a new field with the same key/value to the current information of the user; for example, a field of the matching user with key "data" and value "myDate" ("data: myDate") generates a field of the current user with identifier "IDn", key "data" and value "myDate" ("IDn - date: myDate"). The flow of activity merges at block 572 (from blocks 569-571), wherein the aggregation manager replaces the value of the field of the matching user in the providers repository with the identifier of the corresponding field of the current user; particularly, if the field of the matching user is marked as equal/synonymous of the identifier of the field of the current user, its value is replaced with the latter ("electronic mail: mylD" in the example at issue), if the field of the matching user is marked as included in the identifier of the field of the current user its value is replaced with the identifier of the first simple field ("via:IDs1" in the example at issue) and if the field of the matching user is marked as new its value is replaced with the identifier of the new field ("data: IDn" in the example at issue). The aggregation manager at block 573 verifies whether all the fields of the pending record have been processed. If not, the process returns to block 567 to repeat the same operations with a next field of the pending record. Conversely, once all the fields of the pending record have been processed, the loop is exited by passing to block 574. At this point, the aggregation manager sets the status flag of the user in the service as "active" (if possible) and updates the modifications log in the providers repository accordingly. At the same time, if necessary, the distribution agent transmits the modified information of the user (resulting from the fields of the pending record) to the provider of the service by sending a corresponding modification message (comprising the modified information) to its server. Returning to block 566, if the user refuses the pending record, the aggregation manager at block 575 cancels it; for example, this occurs when the user does not recognize the service to which s/he would be registered. The process then returns to block 562 from block 574 or from block 575.

With reference to block 576 (modification operation), the aggregation interface is used by the user to modify his/her information; this may occur in response to a corresponding notice (for new information required by a service to which the user is registered or for information being expiring) or on his/her own initiative. In any case, the user enters the modified information (new fields and/or new values of existing fields). A loop is now performed to process the fields of the modified information. The loop begins at block 577, wherein the aggregation manager takes into account a (current) field of the modified information (starting from a first one in any order). The aggregation manager at block 578 modifies the information of the user in the corresponding repository accordingly (by adding the new field or modifying the value of the existing field). The aggregation manager at block 579 determines the (modified) services whose information of the user comprises the same field in the providers repository. Particularly, in the case of a request for new information by a service to which the user is registered it is only this service, whereas on the contrary the services are the ones whose information of the user comprises the identifier of the field. The aggregation manager adds the key/value of the field and the identifier of the corresponding services to an (initially empty) distribution list. The aggregation manager at block 580 verifies whether all the fields of the modified information have been processed. If not, the process returns to block 577 to repeat the same operations with a next field of the modified information. Conversely, once all the fields of the modified information have been processed, the loop is exited by passing to block 581. A loop is now performed to process the distribution list. The loop begins with the distribution agent taking into account a (current) service among all the ones indicated in the distribution list (starting from a first one in any order). The distribution agent at block 582 determines the modified information of the user for the service in the distribution list. At the same time, the aggregation manager sets the status flag of the corresponding user of the service as "active" or "suspended" (if necessary) and updates the modifications log in the providers repository accordingly. The distribution agent at block 583 distributes the modified information of the user to the provider of the service by sending a corresponding modification message (comprising the identifier of the user for the service and the modified information) to its server. The distribution agent at block 584 verify whether all the services in the distribution list have been processed. If not, the process returns to block 581 to repeat the same operations with a next service of the distribution list. Conversely, once all the services of the distribution list have been processed, the loop is exited and the process returns to block 562.

Moving to the swim-lane of the server a generic provider, the aggregation agent at block 585 receives a modification message from the server of the aggregator (being in a waiting condition for it), from block 574 or from block 583. In response thereto, the corresponding service manager at block 586 updates the information of the user in the service repository accordingly. The process then returns to block 585 waiting for a next modification message. This procedure allows the users to modify their information with the providers of the services to which they are registered in a centralized way (through the single aggregator interface); moreover, the same information may be massively updated with the providers of all the services to which this information has been submitted.

*Vice-versa* (not shown in the figure) a user, registered or not with the aggregator, may access the server of the provider (registered with the aggregator) of a service to which s/he is registered (subject to his/her authentication) through his/her client and use the manager interface of the service to modify his/her information. In response thereto, the aggregation agent uploads the modified information of the user to the server of the aggregator, wherein the aggregation manager updates the providers repository and the users repository accordingly as above.

### Modifications

Naturally, in order to satisfy local and specific requirements, a person skilled in the art may apply many logical and/or physical modifications and alterations to the present invention, provided that it remains within the scope of the claims. More specifically, although this invention has been described with a certain degree of particularity with reference to one or more embodiments thereof, it should be understood that various omissions, substitutions and changes in the form and details as well as other embodiments are possible. Particularly, different embodiments of the present invention may be practiced even without the specific details (such as the numerical values) set forth in the preceding description to provide a more thorough understanding thereof; conversely, well-known features may have been omitted or simplified in order not to obscure the description with unnecessary particulars. Moreover, it is expressly intended that specific elements and/or method steps described in connection with any embodiment of the present invention may be incorporated in any other embodiment as a matter of general design choice. Moreover, items presented in a same group and different embodiments, examples or alternatives are not to be construed as *de facto* equivalent to each other (but they are separate and autonomous entities). In any case, each numerical value should be read as modified according to applicable tolerances; particularly, unless otherwise indicated, the terms "substantially", "about", "approximately" and the like should be understood as within 10%, preferably 5% and still more preferably 1%. Moreover, each range of numerical values should be intended as expressly specifying any possible number along the *continuum* within the range (comprising its end points). Ordinal or other qualifiers are merely used as labels to distinguish elements with the same name but do not by themselves connote any priority, precedence or order. The terms include, comprise, have, contain, involve and the like should be intended with an open, non-exhaustive meaning (i.e., not limited to the recited items), the terms based on, dependent on, according to, function of and the like should be intended as a non-exclusive relationship (i.e., with possible further variables involved), the term a/an should be intended as one or more items (unless expressly indicated otherwise), and the term means for (or any means-plus-function formulation) should be intended as any structure adapted or configured for carrying out the relevant function.

For example, an embodiment provides a method for aggregating information. However, the information may be of any type (for example, data such as of personal, commercial, technical and the like nature, documents such as of identity, fiscal, public and the like, photographs, videos and the like, either certified or not, with or without control data of any kind, and so on).

In an embodiment, the information is of producers being provided to consumers thereof through a telecommunication network. However, the producers and the consumers may be in any number and of any type (for example, users and providers of online/standard services, clients and suppliers, suppliers and clients, participants and associations, citizens and public bodies, respectively, and so on) and the information may have been provided through any telecommunication network (see below).

In an embodiment, the method comprises the following steps under the control of a computing system of an aggregator. However, the computing system may be of any type (see below) and of any aggregator (for example, private company, public body and so on).

In an embodiment, the method comprises registering (by the computing system) one or more of the producers with the aggregator. However, these producers may be in any number and registered in any way (for example, in response to a registration request of any kind, as submitted via web form, message and the like, with corresponding information provided in any manner, such as together with the registration request, uploaded later on, via a link for its downloading and the like, and stored in any way, such as in a local/remote repository comprising a database with one or more tables, one or more files, and so on).

In an embodiment, each of the producers is registered with the aggregator in association with information of the producer. However, this information may be of any type (for example, simple/complex fields, pre-defined/customizable, in the form of key/value, column/cell, and so on).

In an embodiment, the information of the producer comprises identification information thereof. However, the identification information may be of any type (for example, partial, different and/or additional information with respect to the one mentioned above, usable individually or in any combination thereof to identify the producer, and so on).

In an embodiment, the method comprises registering (by the computing system) one or more of the consumers with the aggregator. However, these consumers may be in any number and registered in any way (for example, either the same or different with respect to the registration of the producers).

In an embodiment, each of the consumers is registered with the aggregator associated with one or more of the producers being registered with the aggregator that are registered with the consumer. However, these producers may be in any number and identified in any way (for example, by e-mail address, unique code for the aggregated consumer and so on); in any case, the consumer may be registered associated only with its producers which are registered with the aggregator or also with its producers which are not registered with the aggregator (in association with their actual information).

In an embodiment, each of the producers associated with the consumer is registered associated with information of the producer (comprising identification information thereof) that has been provided to the consumer. However, this information may be of any type (for example, in the form of key/value, column/cell, and so on) and it may comprise identification information of any type (for example, either the same or different with respect to the one of the producers being registered with the aggregator).

In an embodiment, the method comprises the following operations for each pair of current producer and current consumer equal to: a) a new one of the producers to be registered with the aggregator and each of the consumers being registered with the aggregator, and b) each of the producers being registered with the aggregator and a new one of the consumers to be registered with the aggregator. However, these operations may be performed in any way (for example, adding the new producer or the new consumer with its producers and then matching them with the producers being already registered, matching the new producer or the producers of the new consumer with the producers being already registered and then adding the new producer/consumer, and so on).

In an embodiment, the operations comprise searching (by the computing system) for a matching producer among the producers associated with the current consumer that corresponds to the current producer according to a comparison between the identification information of the current producer and the identification information of each of the producers associated with the current consumer. However, the matching producer may be determined in any way (for example, as soon as an equal identification field is found, when a minimum number of equal identification fields are found, up to all of them, and so on).

In an embodiment, the operations comprise classifying (by the computing system) the information of the matching producer into matching information and non-matching information corresponding and non-corresponding, respectively, to the information of the current producer. However, the information of the matching producer may be classified in any way (for example, with the information considered to be matching when equal, synonymous and/or included, and so on).

In an embodiment, the operations comprise adding (by the computing system) the non-matching information of the matching producer to the information of the current producer. However, non-matching information may be added to the information of the current producer in any way (for example, directly, subject to confirmation of the current producer and so on).

In an embodiment, the operations comprise replacing (by the computing system) the information of the matching producer with a reference to the corresponding information of the current producer. However, the information of the matching producer may be replaced in any way (for example, directly, subject to confirmation of the matching producer, always or excluding information being unique for the consumer, and so on) and with any reference to the information of the current producer (for example, one or more identifiers, pointers, indexes, and so on).

Further embodiments provide additional advantageous features, which may however be omitted at all in a basic implementation.

In an embodiment, the consumers are providers of services offered through the telecommunications network and the producers are users of the services. However, the services may be of any type (for example, partial, different and/or additional services with respects to the ones mentioned above) and the users may be of any type (for example, persons, applications and so on).

In an embodiment, the method comprises receiving (by the computing system) corresponding requests of query from one or more of the producers being registered with the aggregator. However, the requests of query may be in any number and submitted in any way (for example, either the same or different with respect to the requests of registration).

In an embodiment, the method comprises the following operations for each of the producers requesting the query.

In an embodiment, the operations comprise reconstructing (by the computing system) the information of the producer requesting the query that is registered with each of the consumers being registered with the aggregator according to the corresponding references to the information of the producer requesting the query that is registered with the aggregator. However, this information may be reconstructed in any way (for example, overall, on the basis of any search criteria selected by the producer requesting the query and so on).

In an embodiment, the operations comprise displaying (by the computing system) a representation of the information that has been reconstructed of the producer requesting the query that is registered with each of the consumers being registered with the aggregator. However, this information may be displayed in any representation (for example, a table, a list and so on); more generally, the information may also be provided in another way (for example, printed, downloaded and so on) and the producer may request any other type of information relating to the consumers with which it is registered (for example, partial, different and/or additional information with respect to the one mentioned above).

In an embodiment, the method comprises receiving (by the computing system) corresponding requests of modification of the information of one or more of the producers being registered with the aggregator. However, the requests of modification may be of any type (for example, new information, changes of pre-existing information and so on) and they may be submitted in any way (for example, by accessing the computing system by the producer through its client, through procedure invocation, message sending and the like by the server of a consumer to which the producer has submitted the request of modification, and so on).

In an embodiment, the method comprises the following operations for each of the producers requesting the modification.

In an embodiment, the operations comprise modifying (by the computing system) the information of the producer requesting the modification being registered with the aggregator according to the request of modification. However, this information may be modified in any way (for example, subject to review and confirmation of the producer in any case or only for some types of information, directly and so on).

In an embodiment, the operations comprise identifying (by the computing system) one or more of the consumers being registered with the aggregator each having the producer requesting the modification that is registered with the consumer with the corresponding information comprising the reference to the information that has been modified. However, these consumers may be identified in any way (for example, by searching for them at the moment, by extracting them from a list kept up-to-date over time and so on).

In an embodiment, the operations comprise distributing (by the computing system) the information that has been modified to the consumers that have been identified through the telecommunication network. However, this information may be distributed in any way (for example, through procedure invocation, message sending and the like, to cause each consumer to modify the local information automatically, subject to confirmation or manually, and so on).

In an embodiment, the method comprises receiving (by the computing system) corresponding further requests of modification from one or more of the consumers being registered with the aggregator. However, the further requests of modification may be in any number and submitted in any way (for example, by accessing the computing system by an administrator of the consumer through his/her client, through procedure invocation, message sending and the like by a server of the consumer, and so on).

In an embodiment, each of the further requests of modification comprises an indication of new information requested to the producers being registered with the consumer. However, the new information may be of any type (for example, partial different and/or additional new information with respect to the one mentioned above).

In an embodiment, the method comprises the following steps for each of the consumers requesting the further modification.

In an embodiment, the operations comprise classifying (by the computing system) the new information for each of the producers being registered with the consumer requesting the further modification into matching new information and non-matching new information corresponding and non-corresponding, respectively, to the information of the producer being registered with the aggregator. However, the new information may be classified in any way (for example, either the same or different with respect to above).

In an embodiment, the operations comprise adding (by the computing system) a reference to the information of the producer being registered with the aggregator corresponding to the matching new information to the information of each of the producers being registered with the consumer requesting the further modification. However, the reference to this information may be added in any way (for example, either the same or different with respect to above).

In an embodiment, the information of each of the producers being registered with the aggregator comprises one or more fields having corresponding identifiers that uniquely identify the fields. However, the identifiers may be of any type (for example, qualified with the identifier of the producer, general and so on).

In an embodiment, the fields have corresponding sets each of one or more keys. However, the keys may be in any number and of any type (for example, words, codes and so on).

In an embodiment, the fields comprise one or more simple fields each comprising a value. However, the simple fields may be in any number and comprising values of any type (for example, data, documents, files and so on).

In an embodiment, the information of each of the producers being registered with each of the consumers being registered with the aggregator comprises one or more fields each having a key and comprising a value. However, these fields may be in any number and of any type (as above).

In an embodiment, the method comprises the following operations for each pair of current producer and current consumer.

In an embodiment, the operations comprise determining (by the computing system) one or more equal fields among the fields of the matching producer each having the key and the value equal to one of the keys and to the value, respectively, of a corresponding one of the simple fields of the information of the current producer. However, the equal fields may be in any number (even null) and determined in any way (for example, when the key of the information of the matching producer is comprised in the keys of the information of the current producer, when the key of the information of the matching producer is identical to the key of the information of the current producer, and so on).

In an embodiment, the operations comprise replacing (by the computing system) each of the equal fields of the information of the matching producer with the identifier of the corresponding simple field of the information of the current producer. However, this operation may be performed any way (as above).

In an embodiment, the operations comprise determining (by the computing system) one or more synonymous fields among the fields of the information of the matching producer each having the key different from the keys and the value equal to the value, respectively, of a corresponding one of the fields of the information of the current producer. However, the synonymous fields may be in any number (even null) and determined in any way (for example, indiscriminately, only when the different keys are associated in a synonymous dictionary and so on).

In an embodiment, the operations comprise adding (by the computing system) the key of each of the synonymous fields to the keys of the corresponding simple field of the information of the current producer. However, this operation may be performed in any way (as above).

In an embodiment, the operations comprise replacing (by the computing system) each of the synonymous fields in the information of the matching producer with the identifier of the corresponding simple field of the information of the current producer. However, this operation may be performed in any way (as above).

In an embodiment, the operations comprise determining (by the computing system) one or more included fields among the fields of the information of the matching producer each having the value comprised in the value of a corresponding one of the simple fields of the information of the current producer. However, the included fields may be in any number (even null) and determined in any way (for example, independently of the keys, when the key of the information of the matching producer is related to the keys of the information of the current producer, and so on).

In an embodiment, the operations comprise replacing (by the computing system) the field corresponding to each of the included fields in the information of the current producer with a first new one of the simple fields comprising the key and the value of the included field, a second new one of the simple fields comprising a part of the value of the field corresponding to the included field other than the value of the included field, and a new complex field of the fields having the identifier and the keys of the field corresponding to the included field and comprising the identifiers of the first new simple field and of the second new simple field. However, this operation may be performed in any way (as above).

In an embodiment, the operations comprise replacing (by the computing system) each of the included fields in the information of the matching producer with the identifier of the corresponding first new simple field. However, this operation may be performed in any way (as above).

In an embodiment, the method comprises conditioning (by the computing system), said step of adding the non-matching information and said step of replacing the information to an approval of the current producer. However, the approval may be requested and obtained in any way (for example, requested through notification via e-mail, SMS and so on, and obtained through web page, message and so on).

In an embodiment, the information of each of the producers being registered with the aggregator comprises one or more fields with possible expirations thereof. However, this information may comprise any number of fields with any number of them (even none) having any expirations (for example, deadline, duration and so on).

In an embodiment, the method comprises the following operations for each of the producers being registered with the aggregator.

In an embodiment, the operations comprise monitoring (by the computing system) the expirations of the fields of the information of the producer. However, the expirations may be monitored in any way (for example, for their deadline, with any advance and so on).

In an embodiment, the operations comprise alerting (by the computing system) the producer according to the expirations of the fields of the information of the producer. However, the producer may be alerted of the expirations in any way (for example, through e-mail, SMS and the like, by sending one or more reminders before the expiration, by sending one or more reminders after the expiration, and so on).

In an embodiment, the method comprises sending (by the computing system) a request of discovery of the new producer to one or more of the consumers being not registered with the aggregator. However, the request of discovery may be of any type (for example, making reference or not to a mandate of the new provider, such as attached, to be downloaded from the computing system of the provider and so on) and distributed in any way (for example, through regular/certified e-mail, message and so on).

In an embodiment, the method comprises the following operations for each of the consumers being not registered with the aggregator that has responded to the request of discovery by returning corresponding information of the new producer being registered with the consumer that has been provided thereto. However, these operations may be performed in any way (for example, adding the new producer and then matching it to the consumer being registered with the producer, matching the new producer to the consumer being registered with the producer and then adding it, and so on).

In an embodiment, the operations comprise registering (by the computing system) the consumer with the aggregator associated with the new producer, the new producer associated with the consumer being registered associated with the corresponding information. However, this information may be added in any way (for example, either the same or different with respect to above, in a single repository with the consumers being registered or in a separate repository for the consumers being not registered with the aggregator, and so on).

In an embodiment, the operations comprise performing (by the computing system) said step of classifying the information, said step of adding the non-matching information and said step of replacing the information for the current producer equal to the new producer and the matching producer equal to the producer being registered with the consumer. However, these operations may be performed in any way (for example, either the same or different with respect to above).

A further embodiment provides a corresponding method comprising the steps performed by the computing system of the aggregator, by one or more computing systems of the producers and by one or more computing systems of the consumers (which communicate with each other via the telecommunication network). However, the computing systems of the producers/consumers may be of any type (see below).

Generally, similar considerations apply if the same solution is implemented with an equivalent method (by using similar steps with the same functions of more steps or portions thereof, removing some non-essential steps or adding further optional steps), provided that it remains within the scope of the claims; moreover, the steps may be performed in a different order, concurrently or in an interleaved way (at least in part).

An embodiment provides a computer program configured to cause a computing system to perform the method of above when the computer program is executed on the computing system. An embodiment provides a computer program product, the computer program product comprising one or more computer readable storage media having program instructions collectively stored in the computer readable storage media, the program instructions being readable by a computing system to cause the computing system to perform the same method. However, the program may be provided in any way (for example, as a SaaS, SOA and the like service, as a classic program, and so on).

Generally, the program may be structured in a different way or additional modules or functions may be provided; likewise, the memory structures may be of other types, or they may be replaced with equivalent entities (not necessarily consisting of physical storage media). For example, the program may take any form suitable to be used by the computing system (see below), thereby configuring it to perform the desired operations; particularly, the program may be in the form of external or resident software, firmware, or microcode (either in object code or in source code), for example, to be compiled or interpreted. Moreover, it is possible to provide the program on any computer readable storage medium; the storage medium is any tangible medium (different from transitory signals *per se*) that may retain and store instructions for use by the computing system. For example, the storage medium may be of electronic, magnetic, optical, electromagnetic, infrared or semiconductor type; examples of such storage medium are fixed disks (where the program may be pre-loaded), removable disks, memory keys (for example, USB), and the like. The program may be downloaded to the computing system from the storage medium or via a (telecommunication) network; one or more network adapters in the computing system receive the program from the network and forward it for storage into one or more storage devices of the computing system. In any case, the solution according to an embodiment of the present disclosure lends itself to be implemented even with a hardware structure (for example, by electronic circuits integrated on one or more chips of semiconductor material), or with a combination of software and hardware suitably programmed or otherwise configured.

An embodiment provides a computing system comprising means configured for performing the steps of the method of above. An embodiment provides a computing system comprising a circuit (for example, any hardware being suitably configured, for example, via software) for performing each of the steps of the same method. However, the computing system may be of any type (for example, a physical machine, a virtual machine or a static or dynamic combination thereof, such as in a cloud computing environment, and so on).

An embodiment provides an information technology infrastructure comprising the computing system of the aggregator, one or more computing systems of the producers, and one or more computing systems of the consumers (communicating with each other via a telecommunication network), which comprise means configured for performing the corresponding steps of the method of above. However, the computing systems of the producers and of the consumers may be in any number and of any type (for example, desktops, laptops, tablets, smartphones, physical servers, virtual servers, cloud services and so on) and the telecommunications network may be of any type (for example, a global, local, wide area network exploiting any type of wired or wireless connections, such as of metal wire, optical fiber, Wi-fi, mobile telephone and so on).

Generally, similar considerations apply if the computing system and the information technology infrastructure each has a different structure, comprises equivalent components or has other operative characteristics, provided that it remains within the scope of the claims. In any case, every component thereof may be separated into more elements, or two or more components may be combined together into a single element; moreover, each component may be replicated to support the execution of the corresponding operations in parallel. Moreover, unless specified otherwise, any interaction between different components generally does not need to be continuous, and it may be either direct or indirect through one or more intermediaries.

## Claims

1. A method (500) for aggregating information of producers being provided to consumers thereof through a telecommunication network (305), wherein the method (500) comprises, under the control of a computing system (115) of an aggregator:
registering (504), by the computing system (115), one or more of the producers with the aggregator each associated with information of the producer comprising identification information thereof,
registering (518), by the computing system (115), one or more of the consumers with the aggregator each associated with one or more of the producers being registered with the aggregator that are registered with the consumer, each of the producers associated with the consumer being registered associated with information of the producer comprising identification information thereof that has been provided to the consumer,
and for each pair of current producer and current consumer equal to
a) a new one of the producers to be registered with the aggregator and each of the consumers being registered with the aggregator, and
b) each of the producers being registered with the aggregator and a new one of the consumers to be registered with the aggregator:
searching (506;526), by the computing system (115), for a matching producer among the producers associated with the current consumer that corresponds to the current producer according to a comparison between the identification information of the current producer and the identification information of each of the producers associated with the current consumer,
classifying (533-540), by the computing system (115), the information of the matching producer into matching information and non-matching information corresponding and non-corresponding, respectively, to the information of the current producer,
adding (567-571), by the computing system (115), the non-matching information of the matching producer to the information of the current producer, and
replacing (572), by the computing system (115), the information of the matching producer with a reference to the corresponding information of the current producer.

2. The method (500) according to claim 1, wherein the consumers are providers of services offered through the telecommunications network (305) and the producers are users of the services.

3. The method (500) according to claim 1 or 2, wherein the method (500) comprises:
receiving (561), by the computing system (115), corresponding requests of query from one or more of the producers being registered with the aggregator,
and wherein the method (500) comprises, for each of the producers requesting the query:
reconstructing (563), by the computing system (115), the information of the producer requesting the query that is registered with each of the consumers being registered with the aggregator according to the corresponding references to the information of the producer requesting the query that is registered with the aggregator, and
displaying (564), by the computing system (115), a representation of the information that has been reconstructed of the producer requesting the query that is registered with each of the consumers being registered with the aggregator.

4. The method (500) according to any claim from 1 to 3, wherein the method (500) comprises:
receiving (576), by the computing system (115), corresponding requests of modification of the information of one or more of the producers being registered with the aggregator,
and wherein the method (500) comprises, for each of the producers requesting the modification:
modifying (577-578), by the computing system (115), the information of the producer requesting the modification being registered with the aggregator according to the request of modification,
identifying (579), by the computing system (115), one or more of the consumers being registered with the aggregator each having the producer requesting the modification that is registered with the consumer with the corresponding information comprising the reference to the information that has been modified, and
distributing (581-584), by the computing system (115), the information that has been modified to the consumers that have been identified through the telecommunication network (305).

5. The method (500) according to any claim from 1 to 4, wherein the method (500) comprises:
receiving (544), by the computing system (115), corresponding further requests of modification from one or more of the consumers being registered with the aggregator each comprising an indication of new information requested to the producers being registered with the consumer,
wherein the method (500) comprises, for each of the consumers requesting the further modification:
classifying (548-550), by the computing system (115), the new information for each of the producers being registered with the consumer requesting the further modification into matching new information and non-matching new information corresponding and non-corresponding, respectively, to the information of the producer being registered with the aggregator, and
adding (572), by the computing system (115), a reference to the information of the producer being registered with the aggregator corresponding to the matching new information to the information of each of the producers being registered with the consumer requesting the further modification.

6. The method (500) according to any claim from 1 to 5, wherein the information of each of the producers being registered with the aggregator comprises one or more fields having corresponding identifiers that uniquely identify the fields and sets each of one or more keys, the fields comprising one or more simple fields each comprising a value, and wherein the information of each of the producers being registered with each of the consumers being registered with the aggregator comprises one or more fields each having a key and comprising a value, for each pair of current producer and current consumer the method (500) comprising:
(a) determining (536), by the computing system (115), one or more equal fields among the fields of the matching producer each having the key and the value equal to one of the keys and to the value, respectively, of a corresponding one of the simple fields of the information of the current producer, and
replacing (572), by the computing system (115), each of the equal fields of the information of the matching producer with the identifier of the corresponding simple field of the information of the current producer, and/or
(b) determining (537), by the computing system (115), one or more synonymous fields among the fields of the information of the matching producer each having the key different from the keys and the value equal to the value, respectively, of a corresponding one of the fields of the information of the current producer,
adding (569), by the computing system (115), the key of each of the synonymous fields to the keys of the corresponding simple field of the information of the current producer, and
replacing (572), by the computing system (115), each of the synonymous fields in the information of the matching producer with the identifier of the corresponding simple field of the information of the current producer.

7. The method (500) according to claim 6, wherein for each pair of current producer and current consumer the method (500) comprises:
determining (538), by the computing system (115), one or more included fields among the fields of the information of the matching producer each having the value comprised in the value of a corresponding one of the simple fields of the information of the current producer,
replacing (571), by the computing system (115), the field corresponding to each of the included fields in the information of the current producer with a first new one of the simple fields comprising the key and the value of the included field, a second new one of the simple fields comprising a part of the value of the field corresponding to the included field other than the value of the included field, and a new complex field of the fields having the identifier and the keys of the field corresponding to the included field and comprising the identifiers of the first new simple field and of the second new simple field, and
replacing (572), by the computing system (115), each of the included fields in the information of the matching producer with the identifier of the corresponding first new simple field.

8. The method (500) according to any claim from 1 to 7, wherein the method (500) comprises:
conditioning (565-566), by the computing system (115), said adding (567-571) the non-matching information and said replacing (572) the information to an approval of the current producer.

9. The method (500) according to any claim from 1 to 8, wherein the information of each of the producers being registered with the aggregator comprises one or more fields with possible expirations thereof, for each of the producers being registered with the aggregator the method (500) comprising:
monitoring (553-558), by the computing system (115), the expirations of the fields of the information of the producer, and
alerting (559), by the computing system (115), the producer according to the expirations of the fields of the information of the producer.

10. The method (500) according to any claim from 1 to 9, wherein the method (500) comprises:
sending (510-511), by the computing system (115), a request of discovery of the new producer to one or more of the consumers being not registered with the aggregator, and
for each of the consumers being not registered with the aggregator that has responded to the request of discovery by returning corresponding information of the new producer being registered with the consumer that has been provided thereto:
registering (513), by the computing system (115), the consumer with the aggregator associated with the new producer, the new producer associated with the consumer being registered associated with the corresponding information, and
performing (514), by the computing system (115), said classifying (533-540) the information, said adding (567-571) the non-matching information and said replacing (572) the information for the current producer equal to the new producer and the matching producer equal to the producer being registered with the consumer.

11. A computer program (400) configured to cause a computing system (115) to perform the method (500) according to any claim from 1 to 10 when the computer program (400) is executed on the computing system ( 115).

12. A computing system (115) comprising means (400) for performing the steps of the method (500) according to any claim from 1 to 10.
